# EUROPEAN PATENT APPLICATION

(11) **EP 2 020 777 A1**
(43) Date of publication of application: **04.02.2009**
(21) Application number: 07113463.9
(22) Date of filing: 30.07.2007
(51) Int. Cl.: H04L 12/28, H04M 3/56

(54) **Telecommunication system and transmitter/receiver radio device**

(71) Applicant: Mulinacci, Massimo, 20141 Milano (IT)
(72) Inventor: Mulinacci, Massimo, 20141 Milano (IT)
(74) Representative: Siniscalco, Fabio

(57) **Abstract**

The invention regards a telecommunications system (100) comprising a first radio transceiver device (1) and a plurality of second radio transceiver devices (2-4) associated with respective users (A-D), characterised in that said transceiver devices are such to be able to operate in peer-to-peer mode and form a network which permits establishing at least one audio conference between the respective users. The system of the invention permits establishing communications between the users without the need to employ specific servers or pre-existing mobile telephone networks.

## Description

The present invention refers to the field of telecommunications.

Today, different technologies are available (for example, mobile telephones and Internet) which permit the exchange of information between people, and which are increasingly developed and equipped with new functions and use possibilities.

Nevertheless, this rapid, continuous technological development does not always meet the real needs of users.

In fact, the telecommunications devices which incorporate the most modern technologies in many cases result difficult to use and the services offered are very costly and not easily recognisable by users.

The object of the present invention is that of proposing a telecommunications system between people which permits establishing communications of a satisfactory quality and which, for example, is less complex and less costly then currently employed systems.

The object of the present invention is achieved by a telecommunications system as defined in the attached claim 1. Preferential embodiments of said system are defined by the dependent claims 2-37. A radio transceiver device also forms part of the present invention, as defined by claim 38.

Further characteristics and advantages of the invention will be clearer from the following description of preferred embodiments, given as indicative and non-limiting, with reference to the attached figures, in which:
- Figure 1 schematically shows a telecommunications system achieved according to one embodiment of the invention;
- Figures 2-5 show different embodiments of a radio transceiver device employable in said system

### EXAMPLE OF THE ARCHITECTURE OF THE COMMUNICATIONS SYSTEM

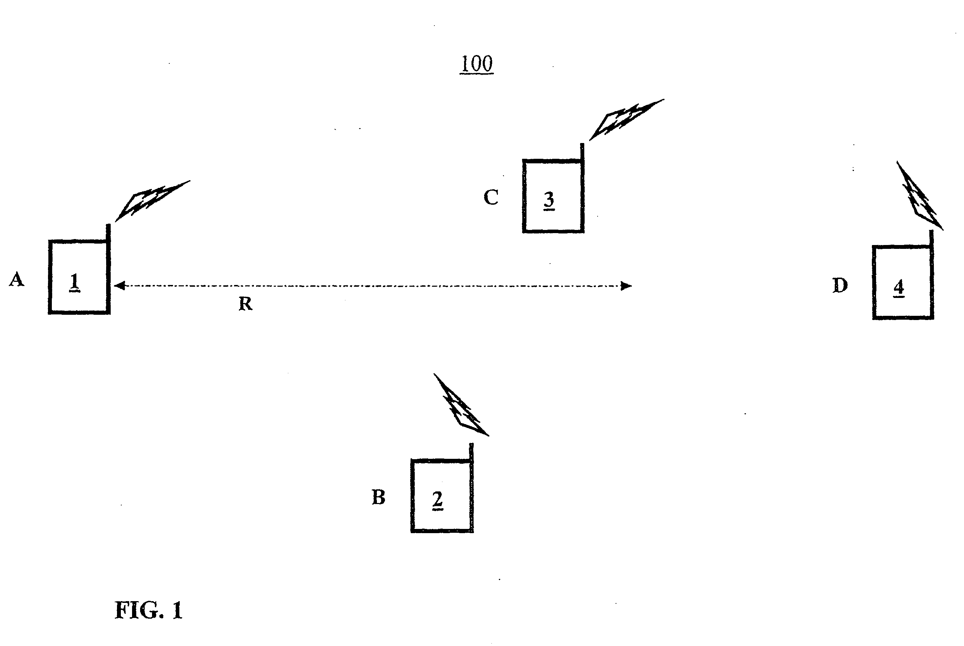

Figure 1 schematically shows a telecommunications system 100 according to an embodiment of the present invention and comprising a first radio transceiver device 1, associated with a first user A. The telecommunications system 100 moreover comprises a plurality, i.e. two or more radio transceiver devices, such as for example a second 2, a third 3 and a fourth 4 device associated with respective users B, C and D.

Such radio transceiver devices 1-4 are capable of communicating with each other according to a peer-to-peer mode. For the purpose of the present invention, with the expression "devices which operate in peer-to-peer mode", it is intended that the various devices are equivalent to each other, i.e. each of these is capable of transmitting/receiving signals to/from at least one other of said devices without having to have "client" functions with respect to a main device which acts as "server" and through which it is necessary to send signals to communicate with other devices of the system.

In addition, the radio transceiver devices 1-4 of the system 100 permit establishing an "audio conference" between the respective users A-C. By "audio conference" it is intended, for the purpose of the present invention, that at least two and, preferably, at least three of the users equipped with the devices participate in an audio signal exchange (reception and transmission) which is perceived as simultaneous by all users involved.

Moreover, such conference occurs in a full-duplex mode, i.e. for the purpose of the invention in a completely bidirectional mode without requiring the closure of communications in one direction (for example, the closure of the reception) before opening the transmission in the other direction (for example, in transmission). In other words, reception and transmission are contemporaneous.

According to an embodiment of the invention alternative to the full-duplex embodiment, the established conference is of simplex type, since it is based on a simplex communication. By simplex conference, it is intended that, in a specific step, a radio transceiver device transmits signals which at least two other radio transceiver devices receive without transmitting signals in response. Subsequently, the initially transmitting radio transceiver device ceases transmission and the transmission will be carried out by another radio transceiver device while the others are listening.

According to another embodiment, the radio transceiver devices 1-4 of the system 100 permit establishing both conference types, i.e. both full-duplex and simplex types.

Another characteristic of the system 100 is that according to which the transceiver devices 1-4 can form an "autonomous" network, i.e. to establish communications between the users involved, the transceiver devices do not require network hardware which is different from the transceiver devices themselves, and in particular do not require the use of equipment (such as radio base stations) which constitute the conventional mobile telephone networks. In particular, the system 100 is not based on pre-existing wireless networks.

According to an alternative embodiment, the network formed by the plurality of radio transceiver devices 1-4 can utilise telecommunications infrastructures comprising telecommunications equipments separate from the radio transceiver devices themselves. For example, the network formed by the plurality of radio transceiver devices 1-4 can operate by utilising of access points making up part of a wireless telecommunications system and/or radio base stations, making up part of a cellular telephone telecommunications system.

Both when the system 100 operates as an autonomous network and when it utilises telecommunications infrastructures comprising telecommunication equipment which is separate from the radio transceiver devices, master-slave architecture can be employed.

According to another embodiment, the network formed by the radio transceiver devices 1-4 can be configured to operate in an autonomous manner as well as utilising telecommunications infrastructures comprising telecommunication equipments separate from the radio transceiver devices.

### EXAMPLE OF THE RADIO TRANSCEIVER DEVICE STRUCTURE

Before describing in detail the functioning modes and type of service that the system 100 offers, below a first embodiment of one of the aforesaid radio transceiver devices will be described, for example the first device 1. Analogous considerations are valid for the other devices 2-4.

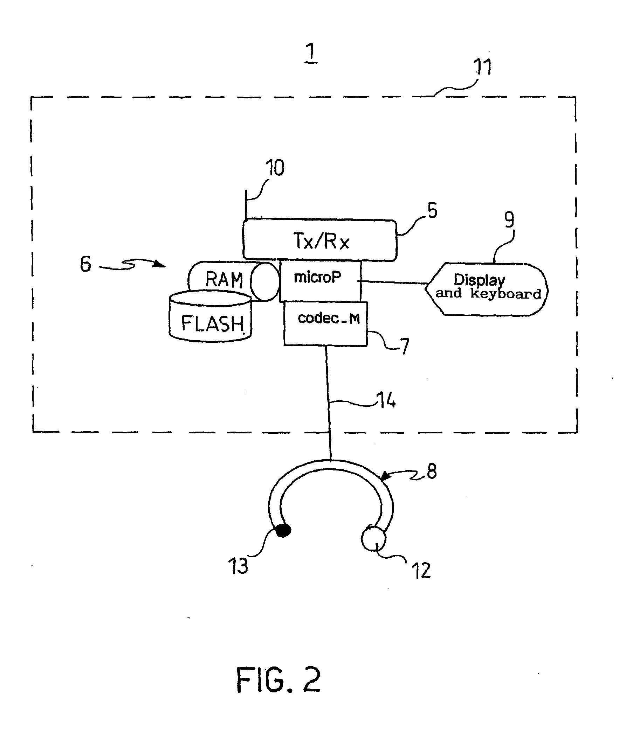

Figure 2 schematically shows such first embodiment of the device 1.

The radio transceiver device 1 comprises a transceiver module 5 (Tx/Rx), a control unit 6, an analogic-digital conversion module 7, an electro-acoustic transducer device 8 (for example, headphones 12 and a microphone 13), and user interface means 9.

The transceiver module 5, provided with one antenna 10, operates under the control of the control unit 6 and is capable of transmitting and receiving radio signals, i.e. signals which propagate in free space. Preferably, such module 5 operates according to a packet-switching technology. In particular, the transceiver module 5 is such to receive a radio carrier, decode it and extract packets of information transported by this, and on the other hand to code the information packets and then transmit them into free space. For example, the transceiver module 5 can comprise one of the following devices existing on the market: Transceiver 2510 of the Chipcon company, Transceiver MOD001 of the Bmgroup.

The transceiver module 5 preferably operates at a carrier frequency equal to 2.4 GHz and has an operating range, for example, comprised within 500 meters. More in general, the transceiver device 5 operates at a carrier frequency in the range of the bands made available for use without license obligation (for example 2.4-2.4835 GHz) and in the cellular telephone bands, if the device is used as accessory of other devices operating in the aforesaid bands.

The control unit 6 comprises a processing unit (microP) such as, for example, a microprocessor and mass and work storage means, such as for example a RAM (Random Access Memory) memory and a Flash memory.

In the control unit 6, a computer program (like a firmware) is stored, for example in the Flash memory, for the command of the different blocks included in the device 1 and for the management of the commands inserted by the first user A. Moreover, the control unit 6 is responsible for managing those functions tied to the network behaviour of the radio transceiver device 1, such as for example the resolution of the necessary levels of the ISO/OSI standard and of the protocol used by the devices 1-4, not processable by the transceiver module 5. In particular, the processing unit microP is directly responsible for the management of accessory data, such as for example data related to the presence of other users, traffic data, and signal level. On the other hand, signals bearing data to be transferred by one radio transceiver to another are managed by the transceiver module 5 and processed by microP, using the RAM memory.

The analogue-digital conversion module 7 is involved in the management of the transducer device 8, and is such to convert the digital electrical signals, received by the transceiver module 5 which transports the information in the form of packets, and processed by the control unit 6, into analogue signals; such analogue signals are suitably coded so to be treated by the electro-acoustic transducer device 8. On the other hand, the analogue-digital conversion module 7 can convert the analogue electrical signals received by the electro-acoustic transducer device 8 into digital signals adapted to be sent to the control unit 6 and to the transceiver module 5. For example, such analogue-digital conversion 7 is the voice CODEC of the Wolfson company (such as, for example, the WM8510 item, having independent headphones).

The interface means 9 are of conventional type and comprise, for example, a display and an alphanumeric keyboard.

It is observed that, according to one embodiment, in addition to the audio conference service, the system 100 can also allow establishing (with modes analogous to those of the audio conference) a conference in which the participants exchange data such as, for example: messages, photographs, videos and films to be displayed on the screen of the interface means 9.

For example, a video-conference can be established which provides for an audio and video conference. The electro-acoustic transducer device 8 is provided, for example, with at least the headphones 12, for conversion from electrical signal to acoustic signal, and with the microphone 13 for conversion from acoustic signal to electrical signal.

According to a particular embodiment, the transceiver radio device of figure 2 is provided with a casing 11 which includes the blocks 5, 6, 7 and 9 and connected by means of a guided transmission means 14 to the electro-acoustic transducer device 8, outside the container 11 (or more metal lines). Below, other exemplifying embodiments of the transceiver radio devices will be described which are employable according to the invention.

With reference to the communication between the various radio transceiver devices 1-4 which can operate, as said, according to peer-to-peer mode, and according to one example can operate autonomously with respect to pre-existing telephone networks, non-limiting examples of wireless communication techniques employable by devices 1-4 are: the Zigbee protocol, based on the IEEE standard 802.15.4, or also the VoIP technology (Voice over Internet Protocol).

### FUNCTIONING EXAMPLES OF THE TELECOMMUNICATIONS SYSTEM

Regarding the functioning of the telecommunications system 100, it is observed that it can permit implementing different types of services, such as for example "thematic" conference, "free" conference, audio advertising messages or notices of any type, localisation of users.

In the case of "thematic conference", the first user A who has purchased the radio transceiver device 1 is associated with an identification code, such as for example an identification symbol or nickname like a logo, image or alphanumeric string. The identification symbol, or its coding, can be stored in the Flash memory of the radio transceiver device 1. Moreover, the user A can associate the identification symbol with a thematic label, i.e. a further code or symbol which identifies a thematic area of interest (for example, music, sport or other).

According to the non-limiting example described here, the user A desires to start or participate in an audio conference, and therefore turns on (by means of the keyboard) his own radio transceiver device 1, which together with the sending of the voice signals also transmits, by means of his own antenna 10, a signal of data type which bears the nickname and also the label of the thematic area of interest.

The case is considered in which the first 1, the second 2 and the third 3 radio transceiver device are found inside an operative region (defined by the respective operative ranges R). In such case, the second 2 and the third 3 radio transceiver device (which are turned on; not necessarily in use) receive the signal bearing the nickname and the thematic label and display them on the related displays. If the users B and C consider it in their interest to communicate with A, since they belong to the same thematic class, they can then select the nickname on the display by acting on the keyboard and begin to transmit his/her own voice, establishing an audio conference which has as participants the users A, B and C. It is observed that neither the typing of a telephone number nor that of a IP address is required.

The voice of the user A is converted into an analogue electrical signal by the microphone 13 and it is then converted into a digital signal by the conversion device 7, which by means of the control unit 6 and the transceiver 5 (together with the antenna 10) transmits the corresponding flow of packets on radio carrier. The second 2 and the third 3 radio transceiver device receive the radio carrier, reconstruct the packets received and send them to the respective conversion module 7 which converts them into analogue signals and sends them to the related headphone 12. Each headphone 12 emits sound signals which are audible by the respective users B and C. The transmission and reception between all the radio transceiver devices occurs in an analogous manner.

Preferably, every radio transceiver device automatically and periodically transmits (for example, every 20 seconds) the related nickname such that every other user who enters in the operative region can display a list of all reachable users and decide whether or not to participate in the audio conference.

It is observed that at the starting of the first radio transceiver device 1, the user A can display on its own display the nicknames of all the other reachable users B and C.

It is noted that the process of sending one's nickname can be advantageously disabled by the related user.

Moreover, it is useful to observe that the telecommunications system 100 does not necessarily require payment of a fee by the users, nor payment correlated to the duration of a conversation undertaken, but may only require the expense tied to the purchase of the radio transceiver device 1-4.

As is evident, even if the system 100 of the invention is adapted to permit communication between more than two users, it can in any case also be employed between only two users.

According to a particularly advantageous embodiment, some or all of the radio transceiver devices of the system 100 can also operate as repeaters, forming a meshed network, to transfer the data signal received by a radio transceiver device towards another device, compatibly with the bandwidth remaining to the device as a result of the quantity of conversations underway.

For example, it could occur that the fourth radio transceiver device 4 of the user D cannot directly communicate with the first radio transceiver device 1, due to the excessive related distance and/or due to the presence of obstacles for the audio signal propagation. In such case, the third radio transceiver device 3 can act as a repeater, permitting communication between users A and D as well. Hence, due to the possibility to form a meshed network (i.e. due to the repeater function, which every device acting as network node can assume), it is possible to establish a conference also in regions of much greater size than the operative range of the single radio transceiver devices. It is observed that the possibility to operate as repeater is also offered by the already mentioned ZigBee protocol and can be selected and activated by the respective user. Moreover, the third radio transceiver device 3 can act as repeater, permitting communication between users A and D as well, even without participating in the current conference.

In the case of "free" conference, such conference is established independently of the identification symbol of the theme of interest, but can be established every time the users are found in a common operative region.

With regard to the possibility of sending audio messages of advertising or other type, one of the radio transceiver devices 1-4 of figure 1 can be, for example, associated with a commercial enterprise which sends advertising messages, or with another entity which sends messages of different content (for example, information related to traffic, weather conditions, etc.) receivable by all reachable users. In particular, the users can also be on transportation means such as cars and motorcycles, and can receive these messages while travelling.

The quantity and quality of the data transmitted is correlated to the specific embodiment of the radio transceiver devices employed.

According to another embodiment of the invention, the system 100, in addition to establishing audio conferences, can also perform the function of user localization system. In this specific case, for example, the radio transceiver devices 2 and 3 are associated not with people but with fixed position whose position coordinates (for example, geographic coordinates or simple address) are stored in the respective Flash memories. If such two radio transceiver devices 2 and 3 receive the nickname of the first user A, these can communicate, to the radio transceiver device 4 or other reachable devices (also by means of devices which operate as repeaters), the presence of the user A in its operative region. This permits, therefore, localising the user A with a satisfactory precision.

Preferably, the radio transceiver devices 1-4 of the system 100 are also capable of exchanging between them data related to the power of the electromagnetic output signal from the related transceiver module 5. Based on this data, the radio transceiver device which receives the emitted signal can obtain, by carrying out the measurements, useful data for evaluating the position of the respective user and managing the mobility, intended as variation of the mutual user distances.

Moreover, the same measurements are indicative of the quality and conditions in which the conference is occurring. Therefore, said radio transceiver device is capable of automatically varying its output power or its sensitivity in reception, so to increase or reduce the operative region affected by the conference so to increase the quality of the reception or to reduce the battery consumption.

According to a preferred embodiment, each of the radio transceiver devices 1-4 is equipped with synchronisation means which permit an adequate synchronisation of the devices involved in the conference. Such synchronisation means can operate according to different modes.

In accordance with a first mode, the synchronisation is based on wireless protocols which offer synchronous communications, tokens, synchronous impulses or other.

In accordance with a second mode, the synchronisation is managed by the microprocessor of the control unit 6 which generates synchronous signals to be transmitted to the other radio transceiver devices.

According to a third mode, the radio transceiver devices 1-4 employ known synchronisation signals, outside the meshed network, which provide a suitable synchronisation signal, such as for example the clocks of the known systems SRC, DCF77, JJY40, JJY60, NIST, MSF, LORAN, HBG, WWVB, GPS, RDS. Moreover, synchronisation signals can be employed which are emitted by radio stations, such as for example BBC, RAI, Radio France. In general, any diffusion system of a time signal, or time synchronism, is useful for this purpose.

The radio transceiver devices 1-4 zero their own synchronisation timer when the synchronous signal is received. All packets send by every radio transceiver device 1-4 will be identified with a progressive number provided by the synchronisation timer.

The radio transceiver device which receives the packets arranges them according to the label of the radio transceiver devices that transmitted them, and in the sequence ordered by each progressive number.

With reference to the possibility of establishing a conference of simplex type, in addition to or alternative to that of full-duplex type, it is observed that the conference takes place, in a first step, between a user of a radio transceiver device (for example, the first user A of the device 1) which transmits without listening and other users which receive and listen without transmitting anything in response.

Initially, it is possible to provide for that only the first user A at the top of the list can transmit. According to a particular embodiment, the user which begins the conference creates the user list and permits the other users to register for speaking.

Subsequently, every time that a user stops speaking and transmitting, he is cancelled from the list and the next user can begin transmitting with his own radio transceiver device, while the others receive and listen without responding, and so on.

Every user is permitted to register or cancel himself/herself from the list, and preferably the number of participating users is not limited to a pre-established number.

### ALTERNATIVE EMBODIMENTS OF THE RADIO TRANSCEIVER DEVICE

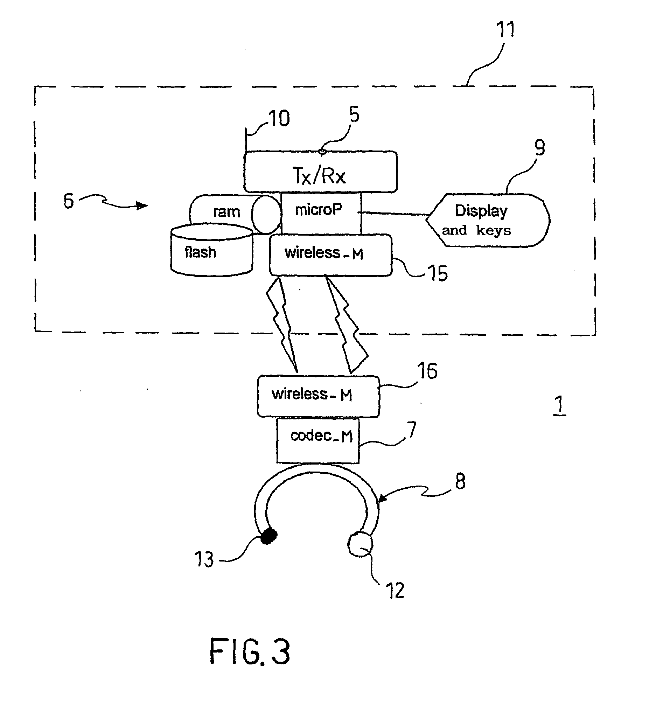

In the subsequent Figure 3, a second embodiment of the radio transceiver device 1 is shown. In figure 3 and subsequent figures, the same reference numbers will be employed to indicate identical or analogous blocks or modules.

The radio transceiver device 1 of figure 3, unlike that of figure 2, provides that the electro-acoustic transducer device 8 which comprises the headphones 12 and the microphone 13, are connected to the control unit 6 by means of wireless technology. In particular, associated with the processing unit microP is a first wireless module 15 (which operates, for example, in Bluetooth technology) which is capable of transmitting/receiving signals in free space towards/from the electro-acoustic transducer device 8. In particular, a second wireless module 16, analogous to the first module 15, is connected to the analogue digital conversion module 7 which is integrated in the structure supporting the headphones 12 and the microphone 13.

This embodiment is particularly adapted for use in motorcycle or bicycle. In fact, the container 11 can be fixed to the transportation means and the other components can be integrated in the helmet. Moreover, a single container 11 can also be common to two helmets, that of the driver and that of the passenger, each having integrated the modules 16, 7 and the device 8.

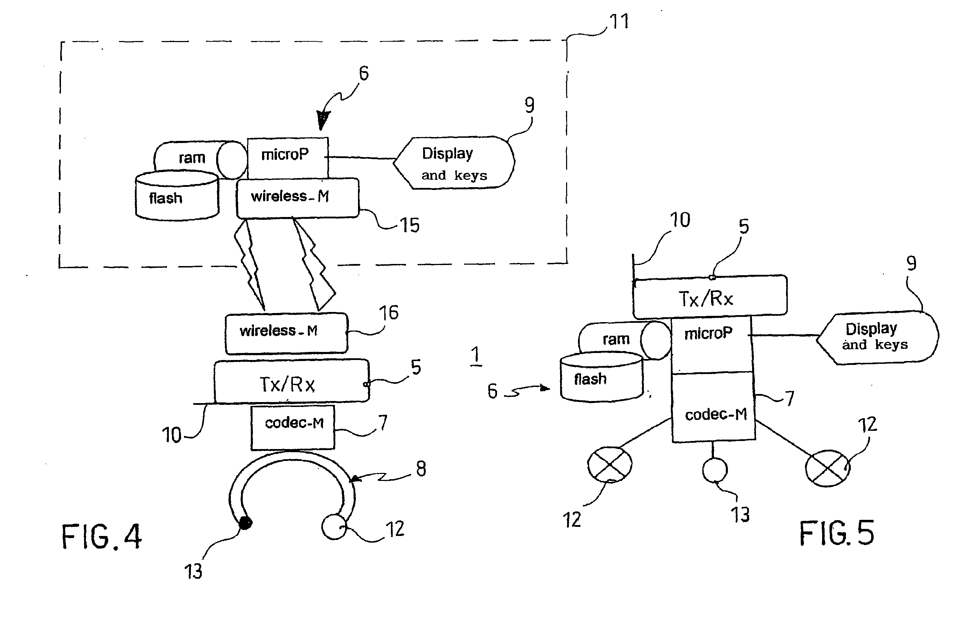

Figure 4 shows a third embodiment, analogous to that of figure 3, but according to which, the control unit 6 and the first wireless module 15 are housed in the container 11, while the second wireless module 16, the transceiver module 5 and the analogic-digital conversion module 7 are integrated in the same structure of the headphones 12 which also bears the microphone 13. In this case, the components of the casing 11 only have remote control functions of the transceiver part associated with the headphones.

Figure 5 shows a fourth embodiment of the radio transceiver device 1 which is particularly adapted for its integration in a car or in another vehicle. In such case, the electrical to acoustic transducing elements 12 and the microphone 13 make a hands-free device.

It is important to observe that as underlined above the radio transceiver device 1 is advantageously a portable device (equipped with its own power supply) and is preferably wearable. Moreover, such device 1 can be a stand-alone device or it can be integrated in other devices having other functions, such as for example: cell phones, multimedia players (for example MP3), IPODs, Gameboy-type devices, hands-free for cars (as described with reference to figure 5) and helmet for motorcycles and bicycles (as described with reference to figures 3 and 4).

The man skilled in the art can achieve this integration on the basis of an ASIC technology (Application-Specific Integrated Circuit) or by making an electronic circuit board which contains the functional blocks contained within the casing 11 of figures 2, 3, 4, or he can design and employ another hardware type according to the specific requirements.

### A FURTHER EMBODIMENT OF THE TELECOMMUNCATIONS SYSTEM 100

The case is considered in which the conference to be established between the radio transceiver devices 1-4 has as object the distribution of information content to a high number of users, without the aid of a traditional infrastructure managed by a mobile radio communication operator.

For example, reference is made to the distribution of multimedia content, as in the case of sending MMS, SMS or other elements bearing useful information to a group of users.

Reference is also made to situations in which the transmissions require a lower band occupation, though the content needs to be distributed in nearly real time, such as for example the contents of a conference or local advertising information.

According to the current standards, the type of service described above would be actuated by basing itself on solutions with network infrastructure and managed by a mobile radio communication operator.

According to an embodiment of the invention, the solution for this typology of service is obtained with a system 100 of peer-to-peer type.

For a service of duplex type in each radio transceiver device 1-4, additional memory buffers were added in which the data received by the other radio transceiver devices are stored. Moreover, a mixer module is provided (such as a software application or a related hardware module) capable of reading such buffers in order to reconstruct the signals coming from different users in separate time instants and order them according to a sequential frame number, unequivocal and synchronised for all devices so to reconstruct the audio in a complete manner.

For a simplex service, for example, a common channel is used on which the content is transferred which is simultaneously received by additional users in the same area.

For the typical characteristics of the point-multipoint transmission, it is not always possible to use some radio techniques (like the exhaustive retransmissions in the case of incorrect reception of the incorrect packets) which increase the efficiency of the transmission in the case of point-point; therefore, to compensate for such performance loss, suitable techniques are used such as for example the H263/H264 techniques.

### ADVANTAGES

The invention is particularly advantageous since it permits achieving telecommunications between various users without having to employ an additional radio coverage service (such as that of a pre-existing mobile telephone network), nor employ equipment of server type.

Moreover, the user can establish the conversation in a simple and quick manner, i.e. without having to type in telephone numbers or dial addresses (such as IP addresses).

Another advantageous aspect is tied to the fact that the users can utilise the telecommunications system without having to pay a fee and without costs related to every conversation carried out.

As described above, the system in accordance with the invention can be used for different purposes, such as objects tied to free time, socialisation, culture, information, security or commercial aims.

Particularly advantageous is the solution which provides for the possibility of one or more radio transceiver devices to operate as repeaters, since this permits considerably amplifying the area over which the system according to the invention is employed.

With regard to the embodiments of the above-described telecommunications system, a man skilled in the art, in order to satisfy contingent needs, can make modifications, adaptations and substitutions of elements with other functionally equivalent elements, without departing from the scope of the following claims. Each characteristic described as belonging to a possible embodiment can be achieved independent of the other described embodiments.

## Claims

1. Telecommunications system (100) comprising a first radio transceiver device (1) and a plurality of second radio transceiver devices (2-4) associated with respective users (A-D), **characterised in that** said transceiver devices are such to operate in peer-to-peer mode, forming a network which permits establishing at least one audio conference between at least part of the respective users.

2. Telecommunications system (100) according to claim 1, wherein said audio conference is of full-duplex type so to provide a full-duplex conference service.

3. Telecommunications system (100) according to claim 1 or 2, wherein said audio conference is of simplex type.

4. System (100) according to claim 1, wherein each of said transceiver devices (1-4) is capable of transmitting/receiving signals inside a respective operative range.

5. System (100) according to claim 1 or 4, wherein at least one of said transceiver devices (1-4) is capable of operating as a repeater to permit communication between at least two other radio transceiver devices, the system being able to operate as a meshed network so to allow the establishment of radio signal exchanges in an operative region of greater size than said operative range.

6. System (100) according to claim 1, wherein each of said transceiver devices (1-4) is equipped with a display screen (9) and is capable of transmitting and/or receiving data signals, for example messages, photographs and/or videos and/or films, to be displayed on said screen.

7. System (100) according to claim 1, wherein each of said transceiver devices is equipped with a control unit (6) such to operate according to a pre-stored computer program.

8. System (100) according to claim 7, wherein the control unit, based on the computer program, is such to permit the respective transceiver device to transmit an identification signal bearing an identification code of the corresponding user.

9. System (100) according to claims 6 or 8, wherein each of the transceiver devices associated with a user is capable of receiving the identification signal transmitted by another of said transceiver devices associated with another user and displaying on said screen a symbol representative of the corresponding user, so to indicate the user's reachability by means of said system.

10. System (100) according to claim 9, wherein the control unit (6) and the computer program are such to transmit the identification signal of the corresponding user in an automatic manner and periodically repeated.

11. System (100) according to claim 10, wherein the control unit (6) and the computer program permit to associate, with the identification code of the corresponding user, a further code representative of the user's belonging to a class of system users sharing pre-established interests.

12. System (100) according to claim 11, wherein on the display screen of said user a user list can be displayed.

13. System (100) according to at least one of the preceding claims, wherein said radio transceiver devices are configured to transmit/receive according to a packet switching technology so to make the full-duplex or simplex connection.

14. System (100) according to at least one of the preceding claims, wherein said transceiver devices operate according to a communication protocol of wireless type, for example ZigBee or according to a VoIP technology.

15. System (100) according to claim 7, wherein each of said transceiver devices comprises:
- a transceiver module (5) for transmitting/receiving radio signals adapted to operate under the control of said control unit (6);
- a transducer device (8) for converting an electrical signal into an acoustic signal audible by a respective user, and vice versa; the transducer device being operatively connected to the control unit;
- an analogic-digital conversion and coding block (7) functionally interposed between said control unit (6) and the transducer device (8).

16. System (100) according to claim 15, wherein at least one of said transceiver devices (1-4) moreover comprises a keyboard for typing commands (9).

17. System (100) according to claim 15, wherein the control unit (6) comprises memories for storing said computer program.

18. System (100) according to claim 15, wherein, in at least one of said transceiver devices (1-4), the control unit (6) and the transducer device (8) are connected by means of a guided signal propagation line (14).

19. System (100) according to claim 15, wherein in at least one of said transceiver devices (1-4), the control unit (6) and the transducer device (8) are connected by means of a first wireless transceiver block (15) associated with the control unit adapted to exchange wireless signals with a second wireless transceiver block (16) associated with the transducer device (8).

20. System (100) according to claim 19, wherein between said second wireless transceiver block (16) and said transducer device (8) the analogic-digital conversion block (7) and said transceiver module (5) are interposed.

21. System (100) according to claim 15, wherein at least one of said transceiver devices (1-4) is at least partially integratable in a motorcycle helmet or it is mountable in a car.

22. System (100) according to claim 1, wherein said transceiver devices emit a radio carrier at a frequency in the range of the bands made available for use without license, for example 2.4 - 2.4835 GHz, and in the cellular telephone bands, if the respective transceiver devices is used as accessory of other devices operating in the aforesaid bands.

23. System (100) according to claim 1, wherein at least three of said transceiver devices are portable.

24. System (100) according to claim 1, wherein at least one of said transceiver devices of the plurality (2-3) is associated with a commercial enterprise for the transmission of advertising messages or to a body for the transmission of messages of other content, such as for example automobile traffic information or weather condition information.

25. System (100) according to at least one of the preceding claims, wherein at least two of said transceiver devices (1-4) are capable of exchanging data signals in addition to signals of audio type exchanged for said audio conference.

26. System (100) according to claim 25, wherein said data signals bear data related to the power of the electromagnetic output signal from the respective transceiver module (5).

27. System (100) according to claims 9 and 26, adapted to moreover perform a localisation function according to which the first transceiver device (1) is associated with a fixed position whose position coordinates are stored in said transceiver device; the first transceiver device being able to communicate to a second transceiver device (2) that a user (C) of a third transceiver device (3) is close to said position coordinates when the first transceiver device receives the identification signal transmitted by the third transceiver device (3).

28. System (100) according to claim 26, wherein at least one of said transceiver devices is such to modify the power of the electromagnetic output signal from the respective transceiver module (5) during transmission.

29. System (100) according to claim 1, wherein at least one of said transceiver devices (1-4) is capable of assuming an operative configuration in which it operates as a repeater without participating in said audio conference.

30. System (100) according to at least one of the preceding claims, wherein at least two of said transceiver devices comprise respective synchronisation means of the transmission between the transceiver devices.

31. System (100) according to at least one of the preceding claims, wherein said network formed by the transceiver devices is autonomous.

32. System (100) according to at least one of the claims 1-30, wherein said network formed by the transceiver devices is such to be able to operate by means of telecommunications infrastructures separate from said network.

33. System (100) according to claims 31 and 32, wherein said network is capable of assuming both an autonomous configuration and a configuration in which it operates by utilising telecommunications infrastructures separate from said network.

34. System (100) according to at least one of the preceding claims, wherein said system is achieved according to a master-slave architecture.

35. System (100) according to at least one of the preceding claims, wherein each of said radio transceiver devices comprises:
memory buffer for storing data received by other transceiver devices;
a mixer module adapted to read such information and reorder it so to reconstruct a related received signal.

36. System (100) according to at least one of the preceding claims, wherein each of said radio transceiver devices comprise:
memory buffer for storing data received by other transceiver devices;
a mixer module adapted to read such information and reorder it so to reconstruct signals received from a respective radio transceiver device.

37. System (100) according to claim 3, wherein said radio transceiver devices are such to transmit on a common channel.

38. Radio transceiver device (1) comprising:
- a transceiver module (5) for transmitting/receiving radio signals;
- a transducer device (8) for converting an electrical signal into an acoustic signal audible by a respective user, and vice versa;
- a control unit (6) of the transceiver module and transducer device and such to operate according to a pre-stored computer program;
**characterised in that** said radio transceiver device is configured such to operate like at least one of the radio transceiver devices of the telecommunications system (100) defined by at least one of the claims 1-37.
